# EUROPEAN PATENT SPECIFICATION

(11) **EP 4 222 359 B1**
(45) Date of publication and mention of the grant of the patent: **23.07.2025**
(21) Application number: 20785480.3
(22) Date of filing: 29.09.2020
(51) Int. Cl.: F02B 1/14, F02D 19/10, F02D 41/00, F02B 7/04, F02D 13/02, F02D 19/06, F02D 41/14, F02D 41/30

(54) **METHOD OF OPERATING A FOUR STROKE INTERNAL COMBUSTION PISTON ENGINE**
VERFAHREN ZUM BETREIBEN EINES VIERTAKT-HUBKOLBENBRENNKRAFTMASCHINE
PROCEDE DE FONCTIONNEMENT D'UN MOTEUR A COMBUSTION INTERNE QUATRE TEMPS

(43) Date of publication of application: 09.08.2023
(73) Proprietor: Wärtsilä Finland Oy, 65100 Vaasa (FI)
(72) Inventor: AXELSSON, Martin, 65100 Vaasa (FI); KAAS, Tom, 65100 Vaasa (FI); TROBERG, Tom, 65100 Vaasa (FI); SIRCH, Giangiorgio, 34018 Trieste (IT)
(74) Representative: Genip Oy
(86) International application number: PCT/EP2020/077189
(87) International publication number: WO 2022/069016

(56) References cited:
- EP-A1- 0 983 433
- EP-B1- 0 983 433
- DE-A1- 10 317 120
- DE-B4- 10 317 120
- US-A1- 2005 022 755
- US-A1- 2016 097 316

## Description

### Technical field

The present invention relates to method of operating a four stoke internal combustion piston engine utilizing homogeneous charge compression ignition (HCCI).

### Background art

Internal combustion piston engine is a known power source for propulsion power and electricity production in stationary power plants as well as in marine vessels. It is also known to operate such engine by making use of gaseous fuel. Environmental issues in the field of internal combustion piston engines have an ever increasing role in the developments in the field. The stringent demands of the present regulations and expectations require use of accurate control system for operating the engines. There are various methods known as such the decrease NOx emissions in internal combustion engines, some of which relate to treatment of exhaust gases and some of which relate to the combustion process itself. During the operation of an internal combustion engine nitrogen oxides (NOx) are formed. NOx is produced during the combustion process in an engine due to high temperature in the presence of oxygen and nitrogen. Therefore the process related methods of reducing NOx emission aim to control formation of temperature peaks during the combustion. However, it is evident that the combustion circumstances vary depending particularly on the load of the engine. Homogeneous charge compression ignition (HCCI) has been considered to be a promising combustion technology for coping with stringent emissions requirements. Homogeneous charge compression ignition (HCCI) uses a well-mixed fuel, recycled exhaust gas and air mixture which is compressed to the point of auto-ignition.

US2016097338A discloses a method of operating a compression ignition engine uses an engine having a cylinder and a piston moveable in the cylinder. The method includes forming a combustible mixture by mixing generally homogeneously a first fuel and air and introducing this mixture into the at least one cylinder, and compressing the combustible mixture with the piston in a compression stroke. During the compression stroke but before start of combustion, a second fuel is added to the combustible mixture, thus creating a cylinder charge, the second fuel being easier to autoignite than the first fuel. The compression stroke is continued until combustion starts at those locations in the cylinder where concentration of the second fuel and/or temperature of the mixture is highest. A temperature of the cylinder charge and/or the amount of second fuel added to the combustible mixture is chosen such that a desired duration of combustion can be achieved.

US2016097316A discloses method for operating a compression ignition engine includes forming a combustible mixture by mixing generally homogeneously a first fuel and air and introducing this mixture into the at least one cylinder, compressing the combustible mixture with the piston in a compression stroke, injecting a second fuel to the combustible mixture at an injection-time of the second fuel during the compression stroke but before start of combustion, and continuing the compression stroke until combustion starts at those locations in the at least one cylinder where concentration of the second fuel is highest and/or the temperature of the mixture is the highest. Emission of the cylinder and/or mechanical stress of the cylinder caused by the combustion are monitored, and if emissions and/or mechanical stress are above respective predetermined thresholds, individually for the cylinder, the amount and/or the timing of the second fuel .injected, and/or temperature of the cylinder charge is changed. An example of a similar engine is also shown in EP-0983433A.

DE10317120A1 disclose a system for determining a residual gas content in a combustion chamber of an internal combustion engine, in particular an HCCI-capable internal combustion engine, wherein the internal combustion engine or the periphery of the internal combustion engine has an exhaust gas recirculation system for supplying residual gas from an earlier combustion cycle to fresh air or to a mixture containing fresh air in order to after injection of fuel to provide an air / fuel residual gas mixture with an energy level that is advantageous for combustion, and has a lambda probe for determining an air / fuel ratio. From a signal output by the lambda probe, a variable characterizing a real residual gas fraction in an air / fuel / residual gas mixture can be determined.

An object of the invention is to provide a method of operating a four stoke internal combustion piston engine using Homogenous Charge Compression Ignition in which the performance and combustion is considerably improved compared to the prior art solutions.

In connection with the application the word lambda refers to concentration of oxygen in exhaust gas, whether being based on an actual measured value or otherwise determined representative value. Thus the air-fuel ratio for the given fuel can be determined by multiplying the lambda with the stoichiometric air-fuel ratio for the fuel.

### Disclosure of the Invention

The invention is defined by the appended claims.

According to an example of the invention a method of operating a four stoke internal combustion piston engine comprising
a) forming a charge into a combustion chamber of a cylinder of the engine comprising steps of:
   removing exhaust gas from the combustion chamber during movement of a piston towards the next top dead center position of the piston by controllably open, and closing an exhaust valve of the cylinder so that a pre-determined amount of exhaust gas from combustion of previous charge, is left in the combustion chamber, and
   introducing lower reactivity fuel into the intake air during a subsequent intake stroke of the piston and
   introducing the lower reactivity fuel and the intake air into the combustion chamber of a cylinder of the engine during the intake stroke via an inlet valve, and
   introducing a controlled amount of higher reactivity fuel into the combustion chamber of the cylinder;
b) compressing the charge in the combustion chamber and igniting the charge by compression ignition in the combustion chamber thus forming exhaust gas,
c) determining a lambda data for the combustion of the charge, and
d) controlling the closing timing of the exhaust gas valve of the cylinder by making use of the lambda data.

This provides an effect of improving the operation of the engine in HCCI combustion because controlling the compression end temperature within combustion chamber is more responsive and accurate. The desired compression end temperature for autoignition is obtained more responsive by controlling the exhaust gas valve closing timing. Suitably early closing of exhaust valve leaves an amount of hot exhaust gas in the combustion chamber and thus correct initial charge temperature prior to compression stroke for the specific engine operating point can be obtained for each stroke of the cylinder.

According to an example of the invention controlling the closing timing of the exhaust valve comprises determining a first control input data, which is determined separately for each one of the cylinders of the engine using higher reactivity fuel injection amount for the cylinder, and determining the lambda data collectively for all cylinders of the engine.

This provides an effect of providing even more accurate and responsive control of exhaust gas valve closing. The amount of exhaust gas left in the combustion chamber effects on the proportion of air in the second cycle and autoignition properties can more precisely controlled. This way the lambda data provides a feedback for closed loop control. This also facilitates minimizing the amount of unburned fuel (so called Total Hydro Carbon emissions) by avoiding too cold combustion temperature and but also reducing particularly NOx emission by not reaching too high temperature. A control signal for controlling the closing timing of exhaust valve(s) in one cylinder is generated based on the first control input data and the collective lambda data.

According to an example of the invention controlling the closing timing of the exhaust valve comprises determining a first control input data which is determined separately for each one of the cylinders of the engine using injection amount of higher reactivity fuel for the cylinder, and the lambda data collectively for all cylinders of the engine, wherein the lambda data is determined by determining an estimated value for the indicative concentration of oxygen based on cylinder specific input values and a value of concentration of oxygen in the exhaust gas resulted in combustion of fuel in the cylinders of the engine. The lambda data is, in other words, generated by making use of the estimated value for the indicative concentration of oxygen and measured concentration of oxygen in the exhaust gas.

This way an improved control of closing timing of the exhaust valve is accomplished due to the two-sided control in which the measured value of concentration of oxygen in the exhaust gas provides a slower response base level for the lambda data and the estimated value for the indicative concentration of oxygen based on cylinder specific input values provides a quick, cylinder-wise adjustment to the lambda data.

According to an example of the invention controlling the closing timing of the exhaust valve comprises determining a first control input data determined separately for each one of the cylinders of the engine using higher reactivity fuel injection amount for the cylinder, and the lambda data collectively for all cylinders of the engine and determining a first control input data which is determined separately for each one of the cylinders of the engine using higher reactivity fuel injection amount for the cylinder, and the lambda data collectively for all cylinders of the engine, wherein the lambda data is determined by determining a measured value of concentration of oxygen in the exhaust gas resulted in combustion of fuel in the cylinders of the engine and adjusting the estimated indicative concentration of oxygen based on cylinder specific input values by the measured value of concentration of oxygen.

According to an example of the invention determining the estimated value for the indicative concentration of oxygen based on cylinder specific input values uses as input values at least one of charge air pressure, lower reactivity fuel pressure, higher reactivity fuel injection amount and engine speed.

According to an example of the invention determining the estimated value for the indicative concentration of oxygen comprises a step of reading a predetermined pre-determined map.

According to an example of the invention determining the estimated value for the indicative concentration of oxygen comprises a step of reading a predetermined, engine-specific map.

According to an example of the invention the first control input data is deter-mined by making use of amount of injected higher reactivity fuel into the cylinder of the engine.

According to an example of the invention forming the charge comprises closing the exhaust valve of the cylinder before the top dead center position.

According to an example of the invention forming the charge comprises introducing the higher reactivity fuel into the combustion chamber of the cylinder after the inlet valve has been closed.

According to an example of the invention the controlled amount of higher reactivity fuel is introduced into the combustion chamber during the compressing stroke of the piston. In other words, the charge is formed to its final ignition composition during the compression stroke.

According to the invention the exhaust valve closing timing is controlled such that in case the measured value of concentration of oxygen in the exhaust gas indicates that the charge is rich, retarding effect is subjected to the exhaust valve closing timing control. Respectively, in case the measured value of concentration of oxygen in the exhaust gas indicate that the charge is lean, advancing effect is subjected to the exhaust valve closing timing control.

Invention relates also to a computer readable memory device comprising instructions which, when executed by a computer, cause the computer to carry out a method according to the invention

By means of the invention it is possible considerably reduce particularly NOx emission, unburned hydrogen carbon emissions while engine performance is still improved compared to dual fuel engines according to prior art.

Load is an external restraining torque being applied to the engine. For the case where the engine is operating at a constant speed, the load torque is equal and opposite to the drive torque being generated by the engine. According to the invention Homogeneous Charge Compression Ignition (HCCI) is achieved by controlling the air-gas mixture self-ignition point, by adjusting the compression end temperature by recirculating the proper amount of exhaust gases internally or externally, and by the air-fuel mixture reactivity through early higher reactivity fuel injection into the mixture of air and lower reactivity fuel. The combustion phasing is closed loop controlled cylinder wise based on real time heat release data calculated from crank angle resolved signal from in-cylinder pressure sensor by adjusting higher reactivity fuel injected quantity.

Particularly suitable fuels for carrying out the invention are gaseous fuel and liquid fuel such that the gaseous fuel is of lower reactivity being incapable of compression ignition alone in the circumstances prevailing the combustion chamber after a compression stroke, while the liquid fuel of higher reactivity and the mixture of the fuels is, due to the amount of liquid fuel in the mixture, capable of compression ignition. A homogenous charge, comprising a low reactivity fuel such as gaseous fuel like natural gas, a high reactivity fuel such as liquid fuel like light fuel oil, recycled exhaust gas and air, is formed in an engine cylinder. As a piston in the cylinder compresses the homogenous mixture, the higher reactivity fuel may be injected at a time before ignition of the homogenous mixture is ignited by further injection of higher reactivity fuel. Combustion of the air-fuel mixture may be controlled in this way to reduce NOx and particulate matter while improving engine fuel economy.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates main operational steps of method of operating a four stoke internal combustion piston engine according to an embodiment of the invention,
Figure 2 illustrates a chart of an exemplary gas exchange valve lift and higher reactivity fuel injection operation according to an embodiment of the invention,
Figure 3 illustrates a computer readable memory device and executable instructions in a form of a block diagram of a computer program according to an embodiment of the invention,
Figure 4 illustrates a computer readable memory device and executable instructions in a form of a block diagram of a computer program according to another embodiment of the invention, and
Figure 5 illustrates method of operating a four stoke internal combustion piston engine according to an embodiment of the invention.

### Detailed Description of Drawings

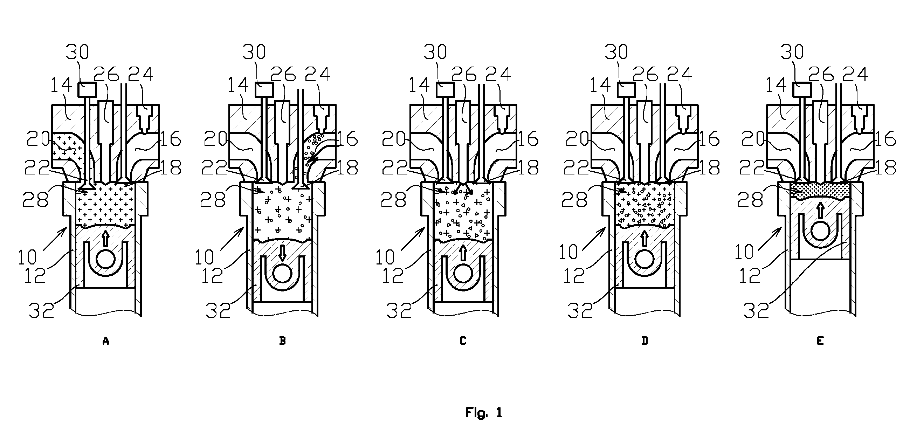

Figure 1 depicts schematically the main operational steps of method of operating a four stoke internal combustion piston engine according to the invention. The engine comprises several cylinders in e.g. V- or inline - configuration. The partial views A to E illustrates different stages of the method with a reference to a single cylinder 10 of the four stroke internal combustion piston engine. Each cylinder 10 is comprised of a cylinder sleeve 12 or a bore in a block of the engine. The cylinder is also provided with a cylinder head 14 which is attached to an end of the cylinder sleeve in a pressure tight manner. The cylinder head 14 is provided with at least one inlet port 16 provided with an inlet valve 18. The cylinder head is also provided with at least one exhaust port 20 provided with an exhaust valve 22. Typically the cylinder comprises more than one inlet and exhaust valves. There is also a first fuel injector, preferably a gas fuel admission valve 24 in connection with the inlet port 16, and a second fuel injector 26, preferably a liquid fuel injector 26, in connection with the cylinder head 10 configured to inject higher reactivity fuel directly into the a combustion chamber 28 in the cylinder 10. The second fuel injector 26 is part of a common rail fuel introduction system (not shown) which is known as such for a skilled person in the art. The inlet valve 18 and its actuation or lifting mechanism is known as such for a skilled person skilled in the art, whereas the exhaust valve 22 is provided with an actuation system 30 which is configured to open the exhaust valve for exhausting the exhaust gases from the combustion chamber 28 and to control the closing timing of the exhaust valve in variable manner for internally recycling the exhaust gas i.e. to close the valve within a crank angle range from 250 degrees to 370 degrees. The exhaust gas valve 22 actuation system 30 may be for example operated in hydraulic manner, solely or in combination with mechanical synchronization with the position of a piston 32 in the cylinder 10. In this context the piston in the cylinder is at its 180 degrees crank angle bottom dead center position after a power stroke in the cycle of 0 to 720 crank angle degrees.

According to the invention, during the engine is running, the operation of the engine is based on the homogeneous charge compression ignition (HCCI) using well-mixed lower reactivity and higher reactivity fuels, recirculated exhaust gas and air compressed to the point of auto-ignition.

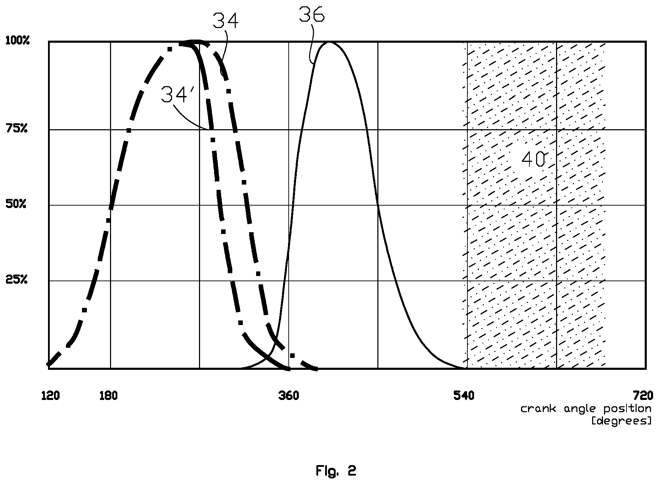

The operation according to the invention comprises a first step A, which is practised during an exhaust stroke of the cylinder concerned. This depicts a stage during which the piston 32 is moving towards is top dead center at 360 degrees of crank angle, the zero crank angle representing the beginning of a power stroke top dead center position. During the stage shown in the figure 1 A the exhaust valve is opened and the inlet valve 18 is closed. The exhaust valve lift is controlled as is shown by the curve 34 in the figure 2. The closing of the exhaust valve is adjusted as is depicted by the curves 34 and 34' in the figure 2. During the step A exhaust gas is removed from the combustion chamber 28 by controllably open the exhaust valve 22 of the cylinder and then closing the valve 22 so that a predetermined amount of exhaust gas from combustion of previous charge, is left in the combustion chamber 28. Closing timing of the exhaust valve in the cylinder, when practising HCCI combustion according to the invention, has a great impact on the ignition and combustion of the charge in the combustion chamber. Early closing of exhaust valve effects on the initial temperature of the charge and therefore also to the temperature rise of the charge during the compression stroke.

Following the exhaust stroke an intake stroke of a cylinder is commenced. In the stage B the combustion chamber 28 contains a portion of the exhaust gas and now the piston 32 is moving away from the cylinder head 14 and the inlet valve 18 is open. The exhaust valve 22 is now closed. Now, the lower reactivity fuel is introduced into the inlet port 16 via the admission valve 24 and lower reactivity fuel and the air introduced into the combustion chamber 28. The lower reactivity fuel is mixed with the air and the internally recycled exhaust gas in the combustion chamber 28.

After the stage B, a step C is practised. The step C in the figure 1 shows a position of the piston approaching the top dead center during a compression stroke with both the inlet valve 18 and the exhaust valve 22 closed. The stage C comprises introducing the higher reactivity fuel directly to the combustion chamber 28 via the fuel injector 26. In the stage C higher reactivity fuel is advantageously introduced into the combustion chamber 28 within a crank angle range from 540 degrees to 680 degrees, which is shown by the shaded area 40 in the figure 2. During the stage C the higher reactivity fuel injection into the combustion chamber 28 comprises one or more separate injections at different crank angles, but prior to the point of ignitions of the charge. During the compression stroke the pressure and particularly the temperature the charge is increased to a level of igniting the charge. The point of ignition is dependent particularly on the control of amount of the more reactant higher reactivity fuel capable of compression ignition as well as the control of exhaust valve closing timing - which effects on the initial temperature of the charge.

The charge comprising the air, recirculated exhaust gas, lower reactivity fuel and higher reactivity fuel is compressed as is depicted by the stage D until a point where the charge is ignited by homogeneous charge compression ignition in the combustion chamber 28, which is depicted by the stage E. It should be noted that the ignition takes place after ending of the last higher reactivity fuel injection, that is, the ignition is an autoignition of the charge, which occurs when the mixture ignites spontaneously with no external ignition source or without a pilot injection, after reaching a certain temperature in the combustion chamber.

The liquid fuel, such as diesel fuel, light fuel oil, marine diesel oil, etc. has its reactivity greater than the gaseous fuel, such as natural gas, methane, propane, methanol, etc. The ignition of the charge comprising the gaseous fuel and the liquid fuel is finally accomplished by compression ignition of the liquid fuel in the charge.

Figure 2 shows an example of valve timings and higher reactivity fuel injection range during a relevant crank angle range of a cylinder. The horizontal axis represent the crank angle and the vertical axis represents relative valve opening as well as relative fuel introduction rate. The curve 34 shows the opening, or lift, of an exhaust gas valve 22 during exhaust stage, the curve 36 shows the opening of an inlet valve 18 during normal inlet stage. The curve 34' shows the closing of the exhaust gas valve 22 during applying the internal exhaust gas recycling, the internal referring to leaving a portion of the exhaust gases from previous combustion to the combustion chamber by early closing of the exhaust gas port 20 of the cylinder 10. The exhaust valve closing is controllable such that any intermediate closing track between the curves 34 and 34' is obtainable.

The shaded area 40 shows the usable range for injecting higher reactivity fuel into the combustion chamber 28 of the cylinder. The higher reactivity fuel injection into the combustion chamber 28 comprises one or multiple, separate injections at different crank angles within the range 40. The amount of the fuel may be controlled by controlling the duration of each injection or opening degree of a control needle of an injector.

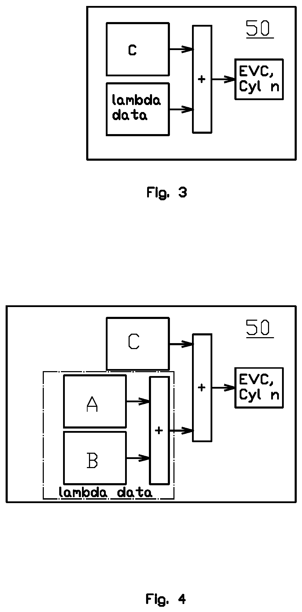

Figure 3 shows a computer readable memory device 50 and executable instructions in a form of a block diagram of a computer program according to an embodiment of the invention, which when executed by a control computer connected to an internal combustion piston engine configured run using HCCI combustion, cause the computer to carry out the method according to the invention in the engine. As explained above in connection with the figures 1 and 2 the closing timing of the exhaust gas valve in the cylinder is controlled by making use of the lambda data. In the figure 3 the block *EVC Cyl n* represents a data of exhaust valve closing timing for an individual cylinder. Data of exhaust valve closing timing is obtained by combining a first control input data provided by the block C in the figure 3 and the lambda data. According to the embodiment shown in the figure 3 the lambda data is determined based on measured concentration of oxygen in the exhaust gases resulted from combustion of the fuels in all of the cylinders.

Figure 4 shows a computer readable memory device 50 and executable instructions in a form of a block diagram of a computer program according to another embodiment of the invention, which when executed by a control computer connected to an internal combustion piston engine configured run using HCCI combustion, cause the computer to carry out the method according to the invention in the engine. As explained above in connection with the figures 1 and 2 the closing timing of the exhaust gas valve in the cylinder is controlled by making use of the lambda data. In the figure 4 the block *EVC Cyl n* represents a data of exhaust valve closing timing for an individual cylinder. Data of exhaust valve closing timing is obtained by combining a first control input data provided by the block C in the figure 4 and the lambda data. According to the embodiment shown in the figure 4 the lambda data is determined based on measured concentration of oxygen in the exhaust gases, as depicted by the *block A,* resulted from combustion of the fuels in all of the cylinders, and an estimated lambda data, as is depicted by the block B. Thus, the lambda data is generated by making use of the estimated value for the indicative concentration of oxygen B and measured concentration of oxygen A in the exhaust gas. The estimated lambda data is obtained by making use of input values which relates to the specific cylinder, while the measured concentration of oxygen in the exhaust gases represents a global, engine-wise data used for control all of the cylinders of the engine. The estimated lambda data is advantageously based on cylinder specific input values using as input values at least one of charge air pressure, lower reactivity fuel pressure, higher reactivity fuel amount and engine speed. The estimated lambda value may be obtained by making use of predetermined maps or functions.

The first input data in connection with both the figures 3 and 4 is determined separately for each one of the cylinders of the engine using advantageously the amount of higher reactivity fuel injection for one cycle, taking into account one or more previous injections / cycles e.g. by averaging the values.

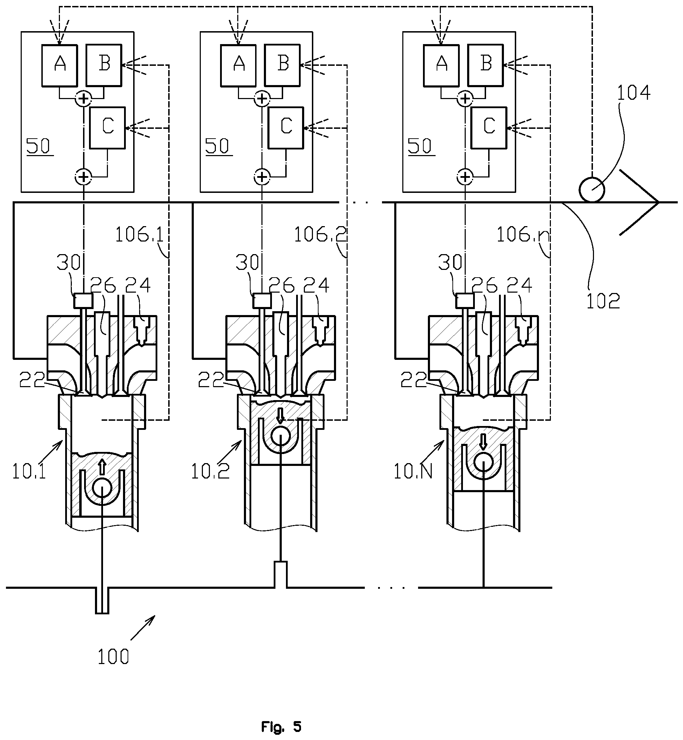

Figure 5 depicts the method and control system in a view of the engine 100. The engine comprises several cylinders 10.1 to 10.N, depending on the configuration, and piston therein connected to the crank shaft as is customary. The exhaust gas valve 22 actuation system 30 is set to be under control of the control system which is described in the figure 4. An exhaust gas duct 102 which is collective to several or all of the cylinders of the engine is provided with a sensor 104 for measuring the concentration of oxygen in the exhaust gases. The measurement data is transmitted to the control block A for use as a global variable for controlling exhaust valve closing timing of all of the cylinders. Respectively the input data for the control block C, which provides the first control input data, is obtained from several variables relating to the respective cylinder as is illustrated by the data transmitters 106.1 to 106.n. Respectively, as is the case in the figure 4, the measured concentration of oxygen in the exhaust gases the resulted from combustion of the fuels in all of the cylinders is transmitted to the control system to the block A to be used such that the lambda data i.e. the control signal is obtained together with an estimated lambda data obtained by the block B. In the control system the first control input data C is determined separately for each one of the cylinders of the engine using at least the higher reactivity fuel injection amount of one or more previous injections for the cylinder as its input data.

According to the invention the exhaust valve closing is controlled such that in case the measured value of concentration of oxygen in the exhaust gas indicates that the charge is rich, the exhaust valve closing time is retarded. This way, when the exhaust valve is open for longer period of time (shifting the closing from the curve 34' towards the curve 34 in the figure 2), less exhaust gas is left to the combustion chamber and proportion of the air is increased in the next charge, making it leaner than the previous one. Respectively, should the measured value of concentration of oxygen in the exhaust gas indicate that the charge is lean, the exhaust valve closing time is advanced. This way, when the exhaust valve is open for shorter period of time, more exhaust gas is left to the combustion chamber and proportion of the air is decreased in the next charge, making it richer than the previous one.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. A method of operating a four stoke internal combustion piston engine (100) comprising
a) forming a charge into a combustion chamber (28) of a cylinder (10) of the engine (100) comprising steps of:
removing exhaust gas from the combustion chamber (28) during movement of a piston (32) towards the next top dead center position of the piston (32) by controllably opening, and closing an exhaust valve (22) of the cylinder (10) so that a predetermined amount of exhaust gas from combustion of previous charge, is left in the combustion chamber (28), and
introducing lower reactivity fuel into the intake air during a subsequent intake stroke of the piston (32) and
introducing the lower reactivity fuel and the intake air into the combustion chamber (28) of a cylinder (10) of the engine (100) during the intake stroke via an inlet valve, and
introducing a controlled amount of higher reactivity fuel into the combustion chamber (28) of the cylinder (10),
b) compressing the charge in the combustion chamber (28) and igniting the charge by compression ignition in the combustion chamber (28) thus forming exhaust gas,
c) determining a lambda data for the combustion of the charge, and
d) controlling the closing timing of the exhaust gas valve of the cylinder (10) by making use of the lambda data
**characterized in that**
controlling the cylinder-wise closing timing of the exhaust valve (22) comprises
A. measuring the lambda data in which value of concentration of oxygen in the exhaust gas, collectively for all cylinders of the engine is measured, providing a base level for the lambda data, and
B. determining a cylinder specific estimated value for the indicative concentration of oxygen based on cylinder specific input values providing a cylinder-wise adjustment to the lambda data obtained in the step A, and further
C. determining a first control input data which is determined separately for each one of the cylinders (10.1 ... 10.N) of the engine (100) using injection amount of higher reactivity fuel for the cylinder (10), thus
providing a cylinder-wise control of closing timing of the exhaust valve.

2. A method of operating a four stoke internal combustion piston engine (100) according to claim 1, **characterized in that** controlling the closing timing of the exhaust valve (22) comprises determining the first control input data using the higher reactivity fuel injection amount for the cylinder (10), and the lambda data collectively for all cylinders (10.1 ... 10.N) of the engine (100).

3. A method of operating a four stoke internal combustion piston engine (100) according to claim 2, **characterized in that** the lambda data is determined by determining a measured value of concentration of oxygen in the exhaust gas resulted in combustion of fuel in the cylinders (10.1 ... 10.N) of the engine (100) and adjusting the estimated indicative concentration of oxygen by the measured value, such that in case the measured value of concentration of oxygen in the exhaust gas indicates that the charge is rich, retarding effect is subjected to the exhaust valve closing timing control, and in case the measured value of concentration of oxygen in the exhaust gas indicate that the charge is lean, advancing effect is subjected to the exhaust valve closing timing control.

4. A method of operating a four stoke internal combustion piston engine (100) according to claim 1 or 3, **characterized in that** determining the estimated value for the indicative concentration of oxygen based on cylinder specific input values uses as input values at least one of charge air pressure, lower reactivity fuel pressure, amount of injection of higher reactivity fuel and engine (100) speed.

5. A method of operating a four stoke internal combustion piston engine (100) according to claim 1, **characterized in that** determining the estimated value for the indicative concentration of oxygen comprises a step of reading a predetermined map.

6. A method of operating a four stoke internal combustion piston engine (100) according to claim 1, **characterized in that** forming the charge comprises closing the exhaust valve (22) of the cylinder before the top dead center position.

7. A method of operating a four stoke internal combustion piston engine (100) according to claim 1, **characterized in that** forming the charge comprises introducing the higher reactivity fuel into the combustion chamber (28) of the cylinder after the inlet valve has been closed.

8. A method of operating a four stoke internal combustion piston engine (100) according to claim 1, **characterized in that** the controlled amount of higher reactivity fuel is introduced into the combustion chamber (28) during the compressing stroke of the piston (32).

9. A computer readable memory device (50) comprising executable instructions which, when executed by a computer, cause the computer to carry out a method of any one of the claims 1 to 9 in a four stroke internal combustion piston engine (100).

## Patentansprüche

1. Verfahren zum Betreiben eines Viertakt-Kolbenverbrennungsmotors (100), umfassend
a) Bilden einer Ladung in einer Brennkammer (28) eines Zylinders (10) des Motors (100), umfassend die folgenden Schritte:
Entfernen von Abgas aus der Brennkammer (28) während der Bewegung eines Kolbens (32) in Richtung der nächsten oberen Totpunktposition des Kolbens (32) durch kontrolliertes Öffnen und Schließen eines Auslassventils (22) des Zylinders (10), so dass eine vorbestimmte Menge an Abgas aus der Verbrennung der vorherigen Ladung in der Brennkammer (28) verbleibt, und
Einführen von Kraftstoff mit geringerer Reaktivität in die Ansaugluft während eines nachfolgenden Ansaughubs des Kolbens (32), und
Einführen des Kraftstoffs mit geringerer Reaktivität und der Ansaugluft über ein Einlassventil in die Brennkammer (28) eines Zylinders (10) des Motors (100) während des Ansaughubs, und
Einführen einer gesteuerten Menge an Kraftstoff mit höherer Reaktivität in die Brennkammer (28) des Zylinders (10),
b) Verdichten der Ladung in der Brennkammer (28) und Zünden der Ladung durch Selbstzündung in der Brennkammer (28), wodurch Abgas gebildet wird,
c) Bestimmen eines Lambda-Datenwerts für die Verbrennung der Ladung, und
d) Steuern des Schließzeitpunkts des Auslassventils des Zylinders (10), indem der Lambda-Datenwert verwendet wird,
**dadurch gekennzeichnet, dass**
das Steuern des zylinderweisen Schließzeitpunkts des Auslassventils (22)
A. das Messen des Lambda-Datenwerts, bei dem der Wert der Sauerstoffkonzentration im Abgas zusammengenommen für alle Zylinder des Motors gemessen wird, wodurch ein Basisniveau für den Lambda-Datenwert bereitgestellt wird, und
B. das Bestimmen eines zylinderspezifischen geschätzten Werts für die indikative Sauerstoffkonzentration auf Basis von zylinderspezifischen Eingabewerten, die eine zylinderweise Anpassung des in Schritt A erhaltenen Lambda-Datenwerts bereitstellen, und ferner
C. das Bestimmen eines ersten Steuereingabedatenwerts, der separat für jeden der Zylinder (10.1 ... 10.N) des Motors (100) bestimmt wird, unter Verwendung der Einspritzmenge an Kraftstoff mit höherer Reaktivität für den Zylinder (10) umfasst, wodurch ein zylinderweises Steuern des Schließzeitpunkts des Auslassventils bereitgestellt wird.

2. Verfahren zum Betreiben eines Viertakt-Kolbenverbrennungsmotors (100) nach Anspruch 1, **dadurch gekennzeichnet, dass** das Steuern des Schließzeitpunkts des Auslassventils (22) das Bestimmen des ersten Steuereingabedatenwerts unter Verwendung der Einspritzmenge an Kraftstoff mit höherer Reaktivität für den Zylinder (10) und des Lambda-Datenwerts zusammengenommen für alle Zylinder (10.1 ... 10.N) des Motors (100) umfasst.

3. Verfahren zum Betreiben eines Viertakt-Kolbenverbrennungsmotors (100) nach Anspruch 2, **dadurch gekennzeichnet, dass** der Lambda-Datenwert bestimmt wird, indem ein gemessener Wert der Sauerstoffkonzentration im Abgas bestimmt wird, der zur Verbrennung von Kraftstoff in den Zylindern (10.1 ... 10. N) des Motors (100) führte, und die geschätzte indikative Sauerstoffkonzentration durch den gemessenen Wert angepasst wird, so dass im Fall, dass der gemessene Wert der Sauerstoffkonzentration im Abgas darauf hinweist, dass die Ladung fett ist, das Steuern des Schließzeitpunkts des Auslassventils einer verzögernden Wirkung ausgesetzt wird, und im Fall, dass der gemessene Wert der Sauerstoffkonzentration im Abgas darauf hinweist, dass die Ladung mager ist, das Steuern des Schließzeitpunkts des Auslassventils einer vorrückenden Wirkung ausgesetzt wird.

4. Verfahren zum Betreiben eines Viertakt-Kolbenverbrennungsmotors (100) nach Anspruch 1 oder 3, **dadurch gekennzeichnet, dass** beim Bestimmen des geschätzten Werts für die indikative Sauerstoffkonzentration auf Basis von zylinderspezifischen Eingabewerten als Eingabewerte mindestens einer von einem Ladeluftdruck, einem Druck des Kraftstoffs mit geringerer Reaktivität, einer Einspritzmenge an Kraftstoff mit höherer Reaktivität und einer Drehzahl des Motors (100) verwendet wird.

5. Verfahren zum Betreiben eines Viertakt-Kolbenverbrennungsmotors (100) nach Anspruch 1, **dadurch gekennzeichnet, dass** das Bestimmen des geschätzten Werts für die indikative Sauerstoffkonzentration einen Schritt des Lesens einer vorbestimmten Zuordnung umfasst.

6. Verfahren zum Betreiben eines Viertakt-Kolbenverbrennungsmotors (100) nach Anspruch 1, **dadurch gekennzeichnet, dass** das Bilden der Ladung das Schließen des Auslassventils (22) des Zylinders vor der oberen Totpunktposition umfasst.

7. Verfahren zum Betreiben eines Viertakt-Kolbenverbrennungsmotors (100) nach Anspruch 1, **dadurch gekennzeichnet, dass** das Bilden der Ladung das Einführen des Kraftstoffs mit höherer Reaktivität in die Brennkammer (28) des Zylinders umfasst, nachdem das Einlassventil geschlossen worden ist.

8. Verfahren zum Betreiben eines Viertakt-Kolbenverbrennungsmotors (100) nach Anspruch 1, **dadurch gekennzeichnet, dass** die gesteuerte Menge an Kraftstoff mit höherer Reaktivität während des Verdichtungshubs des Kolbens (32) in die Brennkammer (28) eingeführt wird.

9. Computerlesbare Speichervorrichtung (50), die ausführbare Anweisungen umfasst, die, wenn sie von einem Computer ausgeführt werden, den Computer dazu veranlassen, ein Verfahren nach einem der Ansprüche 1 bis 9 in einem Viertakt-Kolbenverbrennungsmotor (100) durchzuführen.

## Revendications

1. Procédé de fonctionnement d'un moteur à piston à combustion interne à quatre temps (100) comprenant
a) la formation d'une charge dans une chambre de combustion (28) d'un cylindre (10) du moteur (100), comprenant les étapes suivantes :
élimination des gaz d'échappement de la chambre de combustion (28) pendant le mouvement d'un piston (32) vers la prochaine position de point mort haut du piston (32) par l'ouverture et la fermeture contrôlées d'une soupape d'échappement (22) du cylindre (10) de sorte qu'une quantité prédéterminée de gaz d'échappement provenant de la combustion de la charge précédente reste dans la chambre de combustion (28), et
introduction d'un carburant à faible réactivité dans l'air d'admission lors d'une course d'admission ultérieure du piston (32), et
introduction du carburant à faible réactivité et de l'air d'admission dans la chambre de combustion (28) d'un cylindre (10) du moteur (100) pendant la course d'admission par l'intermédiaire d'une soupape d'admission, et
introduction d'une quantité contrôlée de carburant à réactivité plus élevée dans la chambre de combustion (28) du cylindre (10),
b) compression de la charge la chambre de combustion (28) et allumage de la charge par allumage par compression dans la chambre de combustion (28), en formant ainsi des gaz d'échappement ;
c) la détermination d'une donnée lambda pour la combustion de la charge ; et
d) le contrôle du moment de fermeture de la soupape d'échappement du cylindre (10) en utilisant la donnée lambda,
**caractérisé en ce que**
le contrôle du moment de fermeture de la soupape d'échappement (22) par cylindre comprend :
A. la mesure de la donnée lambda, qui mesure la concentration en oxygène des gaz d'échappement pour tous les cylindres du moteur, en fournissant un niveau de base pour la donnée lambda ;
B. la détermination d'une valeur estimée spécifique au cylindre pour la concentration indicative en oxygène, sur la base des valeurs d'entrée spécifiques au cylindre, en fournissant un ajustement par cylindre aux données lambda obtenues à l'étape A ; et en outre
C. la détermination d'une première donnée d'entrée de commande, qui est déterminée séparément pour chacun des cylindres (10.1, ...,10.N) du moteur (100), en utilisant une quantité d'injection de carburant à réactivité plus élevée pour le cylindre (10), en permettant ainsi un contrôle par cylindre de la synchronisation de fermeture de la soupape d'échappement.

2. Procédé de fonctionnement d'un moteur à piston à combustion interne à quatre temps (100) selon la revendication 1, **caractérisé en ce que** la commande de la synchronisation de fermeture de la soupape d'échappement (22) comprend la détermination des premières données d'entrée de commande à l'aide de la quantité d'injection de carburant à réactivité supérieure pour le cylindre (10) et des données lambda collectivement pour tous les cylindres (10.1,...,10.N) du moteur (100).

3. Procédé de fonctionnement d'un moteur à piston à combustion interne à quatre temps (100) selon la revendication 2, **caractérisé en ce que** les données lambda sont déterminées en déterminant une valeur mesurée de concentration d'oxygène dans les gaz d'échappement résultant de la combustion du carburant dans les cylindres (10.1,...,10.N) du moteur (100) et en ajustant la concentration indicative estimée d'oxygène par la valeur mesurée, de sorte que dans le cas où la valeur mesurée de concentration d'oxygène dans les gaz d'échappement indique que la charge est riche, l'effet de ralentissement est soumis à la commande de synchronisation de fermeture de soupape d'échappement et dans le cas où la valeur mesurée de concentration d'oxygène dans les gaz d'échappement indique que la charge est pauvre, l'effet d'avance est soumis à la commande de synchronisation de fermeture de soupape d'échappement.

4. Procédé de fonctionnement d'un moteur à piston à combustion interne à quatre temps (100) selon la revendication 1 ou 3, **caractérisé en ce que** la détermination de la valeur estimée de la concentration indicative en oxygène, sur la base des valeurs d'entrée spécifiques au cylindre, utilise comme valeurs d'entrée au moins une valeur parmi la pression d'air de suralimentation, la pression du carburant à faible réactivité, la quantité injectée de carburant à réactivité élevée et le régime du moteur (100).

5. Procédé de fonctionnement d'un moteur à piston à combustion interne à quatre temps (100) selon la revendication 1, **caractérisé en ce que** la détermination de la valeur estimée de la concentration indicative en oxygène comprend une étape de lecture d'une carte prédéterminée.

6. Procédé de fonctionnement d'un moteur à piston à combustion interne à quatre temps (100) selon la revendication 1, **caractérisé en ce que** la formation de la charge comprend la fermeture de la soupape d'échappement (22) du cylindre avant le point mort haut.

7. Procédé de fonctionnement d'un moteur à piston à combustion interne à quatre temps (100) selon la revendication 1, **caractérisé en ce que** la formation de la charge comprend l'introduction du carburant à réactivité plus élevée dans la chambre de combustion (28) du cylindre après la fermeture de la soupape d'admission.

8. Procédé de fonctionnement d'un moteur à piston à combustion interne à quatre temps (100) selon la revendication 1, **caractérisé en ce que** la quantité contrôlée de carburant à réactivité plus élevée est introduite dans la chambre de combustion (28) pendant la course de compression du piston (32).

9. Dispositif de mémoire lisible par ordinateur (50) comprenant des instructions exécutables qui, lorsqu'elles sont exécutées par un ordinateur, amènent ce dernier à mettre en œuvre un procédé selon une quelconque des revendications 1 à 9 dans un moteur à piston à combustion interne à quatre temps (100).
